# EUROPEAN PATENT SPECIFICATION

(11) **EP 2 444 243 B1**
(45) Date of publication and mention of the grant of the patent: **29.04.2015**
(21) Application number: 11185615.9
(22) Date of filing: 18.10.2011
(51) Int. Cl.: B32B 1/08, B32B 25/02, B32B 27/20, F16L 11/08, B32B 27/12, B32B 5/10, C08K 3/04, C08K 5/02, B32B 5/26, B32B 15/02, B32B 25/10, B32B 5/02, B32B 25/16

(54) **Fluid resistant high temperature hose**
Flüssigkeitsdichter Hochtemperaturschlauch
Tuyau haute température résistant aux fluides

(30) Priority: 19.10.2010 US 907250
(43) Date of publication of application: 25.04.2012
(73) Proprietor: Veyance Technologies, Inc., Fairlawn, OH 44333-3023 (US)
(72) Inventor: Burrowes, Thomas George, N. Canton, OH 44720 (US); Bates, Kenneth Allen, Medina, OH 44256 (US)
(74) Representative: DREISS Patentanwälte PartG mbB

(56) References cited:
- US-A- 2 138 192
- US-A- 3 485 788
- US-A- 4 753 971
- US-B2- 7 748 412

## Description

### Background of the Invention

Reinforced hoses are used in a multitude of applications in industry and in consumer products for transporting a wide variety of liquid chemicals and fluids for various purposes. For instance, such hoses are utilized in heavy industrial equipment, trucks, and automobiles for transporting transmission, power steering, and air conditioning fluids. It is important for the hose employed in a particular application to be resistant to the fluid which it is intended to convey. This is because lack of good fluid resistance can lead to a substantial reduction in the service life of the hose. It is, of course, also critical for the hose to exhibit adequate fluid resistance while maintaining requisite flexural properties and burst strength. In recent years new automotive fluids has been introduced which make it much more challenging to provide the desired combination of fluid resistance, flexural characteristics, and burst strength. There is accordingly a need for a hose that exhibits improved resistance to modern automotive fluids while maintaining other needed physical characteristics.

United States Patent 6,376,036 discloses an air conditioning hose comprising an innermost layer, a friction coat layer, an intermediate reinforcing layer, and an outermost layer, characterized in that: the innermost layer is comprised of non-plasticized polyamide; the friction coat layer is comprised of a 50/50 weight percent blend of two ethylene propylene diene rubbers, the two rubbers having differing Mooney viscosities, and 75 parts by weight of carbon black the intermediate reinforcing layer is comprised of aramid fibers; and the outermost layer is comprised of a blend of two ethylene acrylic rubbers with differing Mooney viscosities.

United States Patent 6,440,512 discloses a hose which is depicted as having good chemical resistance without sacrificing flexural properties. This hose is comprised of (a) an inner core comprising a ternary blend of (1) from 60 to 85 parts by weight of a low density polyethylene; (2) from 10 to 20 parts by weight of a polyethylene selected from the group consisting of chlorinated polyethylene, chlorosulfonated polyethylene and mixtures thereof; and (3) from 2 to 25 parts by weight of EPDM; (b) a layer of tensioned reinforcement; and (c) an elastomeric cover.

United States Patent 7,614,428 discloses a power steering hose assembly, comprising: a core hose layer; a first reinforcing layer over said core hose layer, wherein said first reinforcing layer is a plastic barrier; an intermediate hose layer over said first reinforcing layer; a second reinforcing layer over said first reinforcing layer, said second reinforcing layer having a braid pattern formed in one of a 3-over, 3-under pattern or 2-over, 2-under pattern; and, an outer hose layer over said second reinforcing layer. The core hose layer may be made of chlorosulfonated polyethylene, a chlorosulfonated polyethylene/chlorinated polyethylene blend, a hydrogenated nitrile rubber or a nitrile rubber. Further, it may also be made of other polymeric material, such as but not limited to polychloroprene, chlorinated polyethylene acrylonitrile-budtadiene, styrene butadiene, polyisoprene, polybutadiene, ethylene-propylene-diene terpolymers, chlorinated polyethylene, or natural rubber polymers. Alternatively, the polymeric material may comprise thermoplastic elastomers such as propylene modified with ethylene-propylene rubber, such as Santoprene® block polymers available from Monsanto Corporation; Kraton® polymers available from Shell Chemical Company; polyvinyl chloride, etc. United States Patent 7,614,428 further indicates that these elastomers may be compounded with other filler, plasticizers, antioxidants, and cure systems to achieve desired properties for particular applications.

United States Patent 7,748,412 discloses a hose comprising: a tubular inner core layer defining a lumen with a diameter of about 1/4 inch; a tubular outer layer; and, a single reinforcing layer disposed between said tubular inner core layer and said tubular outer layer, said single reinforcing layer formed of strands having a 3-over, 3-under braid pattern, said hose having a volumetric expansion not greater than about 0,43 cm³/m (0.13 cc/ft), not greater than about 0,59 cm³/m (0.18 cc/ft), and not greater than about 0,95 cm³/m (0.29 cc/ft), respectively with about 6,89 MPa (1000 psi), about 10,34 MPa (1500 psi), and about 19,99 MPa (2900 psi) of fluid pressure within said lumen.

United States Patent 7,694,695 discloses a controlled expansion hose comprising an inner tube, a textile reinforcement, and an outer cover; the reinforcement consisting essentially of a plurality of nylon yarns and a plurality of polyester yarns wherein said textile reinforcement comprises a balanced reinforcing layer of braided, spiraled or wrapped yarns, and wherein the nylon and the polyester yarns are arranged in alternating fashion in the balanced layer. The materials that are described as being useful for the tube, friction layer(s), and/or cover of these hoses include chlorosulfonated polyethylene ("CSM"), chlorinated polyethylene elastomer ("CPE"), nitrile, hydrogenated nitrile, fluoroelastomers, ethylene alpha-olefin elastomers (such as EPM, EPDM, and the like) and the like. United States Patent 7,694,695 further indicates that these rubber materials may be compounded to include various additional ingredients well known in the art, such as fillers, short fibers, plasticizers, antioxidants, antiozonants, stabilizers, process aids, extenders, adhesion promoters, coagents, vulcanizing agents, curatives, and the like.

United States Patent 2,138,192 discloses a synthetic rubber composition including polymerized chloroprene and a gasoline insoluble chlorinated paraffin wax, which is highly resistant to swelling in gasoline.

### Summary of the Invention

The present invention is based on the unexpected discovery that the fluid resistance of hoses can be greatly enhanced by adding a chlorinated paraffin to a chlorinated polyethylene elastomer or a chlorosulfonated polyethylene elastomer which is used as the tubular inner core layer of the hose. Hoses made using this approach offer the advantage of having improved resistance to modem automotive fluids, including power steering fluid, transmission fluid, and the like, without compromising flexural characteristics or burst strength. Accordingly, the hoses of this invention as claimed in claim 1 provide a longer service life and better reliability then hoses made utilizing conventional technology.

### Brief Description of the Drawings

Figure 1 is a partially broken away perspective view depicting a hose which illustrates one embodiment of this invention.
Figure 2 is a cross-sectional view taken generally along line 2-2 of Figure 1.
Figure 3 is a partially broken away perspective view depicting a hose which illustrates another embodiment of this invention.

### Detailed Description of the Invention

These hoses can be employed in a variety of automotive applications, such as hoses for automatic transmission fluid, air conditioning refrigerant, engine oil, and the like. The dimensions of the lumen incorporated into such hoses will, of course, depend upon the specific application for which the hose will be used. In many applications the hose will have a lumen (an inside diameter) which is within the range of about 10 mm to about 15 mm. The hoses of this invention will typically have an inside diameter which is within the range of 11 mm to 13 mm and will frequently have an inside diameter which is within the range of 11.5 mm to 13.5 mm.

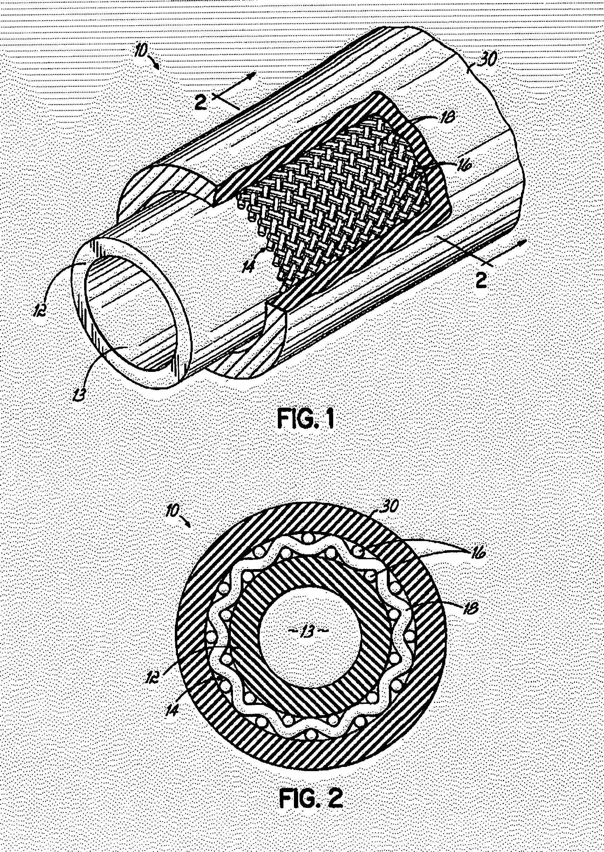

As depicted in Figures 1-3, the hoses of this invention are comprised of an elastomeric tubular inner core layer 12 defining a lumen 13 which is the innermost layer of the hose 10, a friction layer 14 which is positioned outwardly from the elastomeric tubular inner core layer 12, and an elastomeric cover 30 which is positioned outwardly from the friction layer 14 and forms the outermost portion of the hose. The elastomeric tubular inner core layer 12 is frequently referred to in the art as simply the "tube" or as simply as the "core." The friction layer 14 is also known in the art as a reinforcing layer or as a reinforcement layer which typically includes a natural or synthetic textile yarn or metallic wire reinforcement. The hoses of this invention can also include additional layers such as a barrier layer and/or additional reinforcing layers if desired. However, the hoses of this invention can consist solely of the elastomeric tubular inner core layer 12, the friction layer 14, and the elastomeric cover 30.

The elastomeric tubular inner core layer 12 of the hoses of this invention is comprised of (i) a chlorinated elastomer selected from the group consisting of chlorinated polyethylene and chlorosulfonated polyethylene, (ii) 1 phr (parts by weight per hundred parts by weight of rubber) to 50 phr of a chlorinated paraffin, and (iii) 30 phr to 120 phr of carbon black. The chlorinated paraffins that are incorporated into the elastomeric tubular inner core layer 12 have a degree of chlorination which is within the level of 40 percent to 70 percent. The chlorinated paraffin will typically contain from 45 weight percent to 65 weight percent chlorine and will more typically contain 50 weight percent to 55 weight percent chlorine. The chlorinated paraffin can be a short chain paraffin containing from about 10 to 13 carbon atoms, a medium chain paraffin containing from 14 to 17 carbon atoms, or a long chain paraffin containing more than 17 carbon atoms. The viscosity of the chlorinated paraffin increases with increasing chain length. However, the level of chlorination has a much more pronounced effect on viscosity than does the length of the carbon-carbon chain in the chlorinated paraffin.

The chlorinated paraffin will be incorporated into the tube 12 of the hoses of this invention at a level which is within the range of 1 phr to 50 phr. The chlorinated paraffin will typically be incorporated into the tube 12 at a level which is within the range of 5 phr to 48 phr and will more typically be incorporated into the tube 12 at a level which is within the range of 10 phr to 45 phr. The chlorinated paraffin will preferably be incorporated into the tube 12 at a level which is within the range of 15 phr to 42 phr and will more preferably be incorporated into the tube 12 at a level which is within the range of 20 phr to 40 phr. The chlorinated paraffin will most preferably be incorporated into the tube 12 at a level which is within the range of 25 phr to 35 phr.

Chlorinated polyethylene that can be used in the practice of this invention can be in the form of finely-divided particles which typically meet four physical property criteria. First, the chlorinated polyethylene will typically have a weight average molecular weight which is within the range of about 40,000 to about 300,000. Second, the chlorinated polyethylene will also typically have a chemically combined chlorine content of from about 20 to about 48 percent by weight of polymer. Third, the chlorinated polyethylene will typically have a 100 percent modulus, measured in accordance with ASTM Test D-412, from about 0.5 to about 4.8 MPa. Fourth, the chlorinated polyethylene will typically have a heat of fusion which is within the range of about 0 to about 62,8 J (15 calories) per gram, and will preferably have a heat of fusion which is within the range of about 0 to about 41,9 J (10 calories) per gram. Commercially available chlorinated polyethylenes that are suitable for use in the present invention include but are not limited to those obtained from Dow Chemical Company under the designation Tyrin™ 3611P and Tyrin™ CM0136.

The chlorosulfonated polyethylene useful in this invention is typically a material having from about 20 to about 48 weight percent chlorine and from about 0.4 to about 3.0 weight percent sulfur. Typical preparations of chlorosulfonated polyethylene are disclosed in United States Patent 2,586,363 and United States Patent 2,503,252. Commercially available chlorosulfonated polyethylenes which may be used in the present invention include but are not limited to those obtained from E I DuPont de Nemours, Inc, under the designation Hypalon™, such as Hypalon 20, Hypalon 40, Hypalon 40 HS, Hypalon 4085 and Hypalon HPG 6525.

The carbon black will be incorporated into the elastomeric tubular inner core layer 12 of the hoses of this invention at a level which is within the range of about 30 phr to about 120 phr. The carbon black will typically be incorporated into the tube 12 of the hoses of this invention at a level which is within the range of about 60 phr to about 115 phr and will more typically be incorporated at a level which is within the range of about 70 phr to about 110 phr. The carbon black will preferably be incorporated into the tube 12 at a level which is within the range of about 90 phr to about 110 phr.

The carbon black used in the practice of this invention may include any of the commonly available, commercially-produced carbon blacks, but those having a surface area (EMSA) of at least 20 m²/g and more preferably at least 35 m²/g up to 200 m²/g or higher are preferred. Surface area values used in this application are those determined by ASTM test D-1765 using the cetyltrimethyl-ammonium bromide (CTAB) technique. Among the useful carbon blacks are furnace black, channel blacks and lamp blacks. More specifically, examples of the carbon blacks include super abrasion furnace (SAF) blacks, high abrasion furnace (HAF) blacks, fast extrusion furnace (FEF) blacks, fine furnace (FF) blacks, intermediate super abrasion furnace (ISAF) blacks, semi-reinforcing furnace (SRF) blacks, medium processing channel blacks, hard processing channel blacks and conducting channel blacks. Other carbon blacks which may be utilized include acetylene blacks. Mixtures of two or more of the above carbon blacks can be used in preparing the rubber formulation utilized in making the tubes of the hoses of this invention. Typical values for surface areas of usable carbon blacks are summarized in the following table.

| **Carbon Black** | |
|---|---|
| ASTM Designation (D-1765-82a) | Surface Area (D-3765) |
| N-110 | 126 m²/g |
| N-220 | 111 m²/g |
| N-339 | 95 m²/g |
| N-339 | 83 m²/g |
| N-550 | 42 m²/g |
| N-660 | 35 m²/g |

The tube of the hoses of this invention can also include a variety of other compounding ingredients including fillers (in addition to carbon black), plasticizers, reinforcing agents, fillers, peptizing agents, pigments, stearic acid, accelerators, crosslinking agents, antiozonants, antioxidants, processing oils, activators, initiators, curatives, plasticizers, waxes, prevulcanization inhibitors, extender oils and the like that are designed to attain desired characteristics. For instance, the tube formulation will typically contain a peroxide cure system or a thiodiazole cure system. Peroxide cure systems are typically preferred to attain a higher level of heat resistance. It should be noted that the rubber formulation is typically void of zinc compounds.

In those instances, when the hose will be used to convey flammable fluids, electrically conductive blacks may be used. Noncarbon black fillers which may be used include talc, clay, calcium carbonate, silica and the like. Noncarbon black fillers, such as silica, may be used in an amount ranging from about 5 phr to 150 phr. The preferred noncarbon black filler is silica. Oil dispersions containing such fillers may also be used. Organosilanes such as 3,3' bis(triethoxysilylpropyl) tetrasulfide may be used in amounts ranging from 0.1 to 20 phr. Suitable examples of such organosilanes are disclosed in United States Patent 4,128,438. Representative of the antidegradants which may be in the ternary blend composition include microcrystalline wax, paraffinic wax, monophenols, bisphenols, thiobisphenols, polyphenols, hydroquinone derivatives, phosphites, phosphate blends, thioesters, naphthylamines, diphenol amines, substituted and unsubstituted diaryl amine derivatives, diarylphenylenediames, para-phenylene diamines, quinolines and blended amines. Antidegradants are generally used in an amount ranging from about 0.1 phr to about 10 phr with a range of from about 2 phr to 6 phr being preferred. Representative of processing aids which may be used in the rubber composition of the present invention include activated dithio-bisbenzanilide, poly-para-dinitrosobenzene, xylyl mercaptans, aliphatic-naphthenic aromatic resins, polyethylene glycol, calcium stearamide, petroleum oils, vulcanized vegetable oils, pine tar, phenolic resins, synthetic oils, petroleum resins, polymeric esters and rosins. These processing oils may be used in a conventional amount ranging from about 0 phr to about 140 phr. Long chain fatty acids, such as stearic acid, are representative examples of initiators that can be used. Initiators are generally used in a conventional amount ranging from about 1 phr to 4 phr. Additional additives which may be used as part of the cure package include calcium oxide and magnesium oxide. These additives are conventionally used in amounts ranging from 0.1 phr to 25 phr. Crosslinkers such as triallylisocyanurate and triazine-based materials may be used in amounts ranging from 0.25 phr to 6 phr.

The peroxides that can be used in the practice of this invention include those that are normally used in the industry. For example, peroxides such as dicumyl peroxide, α,α'-bis(t-butylperoxide)diisopropylbenzene, benzoyl peroxide, 2,4-dichlorobenzoyl peroxide, 1,1-bis (t-butylperoxy)3,3,5-trimethylcyclohexane, 2,5-dimethyl-2,5-bis(t-butylperoxy)hexane, 2,5-dimethyl-2,5-bis (t-butylperoxy)hexyne-3, methylethyl ketone peroxide, cyclohexanone peroxide, cumene hydroperoxide, pinane hydroperoxide, p-menthane hydroperoxide, t-butyl hydroperoxide, di-t-butyl peroxide and n-butyl 4,4-bis(t-butylperoxy)valerate. The most preferred peroxide curative is dicumyl peroxide. From 1 to about 10 phr of peroxide are typically utilized.

The friction layer 14 in the hoses of this invention is essentially a layer of tensioned reinforcing members 16 and 18. Such reinforcement is known to those skilled in the art and may consist of spiraled, woven, knitted, cabled or braided reinforcement. Such reinforcements are typically derived from cotton, polyester, nylon, metal, rayon or aramid and have a denier value which is within the range of about 1500 to about 2000. When the reinforcement is metal, it may be steel, brass-coated steel, zinc-coated or galvanized steel. The reinforcement is preferably spirally wound or braided yarns under sufficient tension to improve the strength of the hose structure. In another embodiment of this invention the reinforcement is a woven fabric. If the reinforcement is spiral-wound, the reinforcement layer is preferably spirally wrapped at angles such that the flexing of the hose will not result in collapse or kinking. An angle such as from 0° to 89.9° with respect to the centerline of the hose may be used. Most preferably, a neutral angle of 54° 44' or below is used for the spiral wraps. When the reinforcement is a fabric, it is conventionally in the form of a rubber-impregnated fabric. Combinations of two or more types of reinforcement may be used.

The third element required in the hose of the present invention is an elastomeric cover 30. This elastomeric cover 30 may be extruded or spirally wrapped over the underlying layer, which may be the friction layer 14 or, various other optional layers. The elastomers which may be used to form the cover for the hose of the present invention include those known to those skilled in the art such as chlorosulfonated polyethylene, chlorinated polyethylene, acrylonitrile-butadiene rubber/PVC blends, epichlorohydrin, EPDM, chloroprene, EVA and EVM. Preferably, the elastomer used in the cover is chlorinated polyethylene, EPDM or a NBR/PVC blend. The thickness of the elastomeric cover 30 obviously depends upon the desired properties of the hose and the elastomer that is used. Generally speaking, the thickness of the elastomeric cover 30 will range from about 0.5 mm to about 4.0 mm, with a range of from 1.0 mm to being 2.5 mm being preferred.

In addition to the tube 12, the friction layer 14, and the elastomeric cover 30, the hoses of this invention can also contain other optional layers. For example, a barrier layer can optionally be incorporated into the hose 10 on the outside of the inner core 12. Such barrier layer may comprise one or more layers of films. Such barrier layers can be films which are comprised of low density polyethylene, linear low density polyethylene, high density polyethylene, copolymer polypropylene, homopolymer polypropylene and mixtures thereof. Additional materials which can be used as barrier films include fluoroplastics and fluoropolymers including, for example, the TEFLON® and TEFZEL® family of fluoroplastics and fluoropolymers such as TEFLON PTFE (polytetrafluoroethylene), TEFLON FEP (fluorinated ethylene-propylene), TEFLON PFA (perfluoroalkoxy), TEFLON AF and TEFZEL polymers. Another class of polymeric materials which can optionally be used in barrier layers includes terpolymer derived from tetrafluoroethylene, herafluoropropylene and vinylidine fluoride (THV). THV is commercially available from the 3M Company under the designations THV 200, THV 300, THV 400 and THV 500. The thickness of such optional barrier layers is typically within the range of from about 0.025 to 0.30 mm, with a thickness of from 0.1 to 0.2 mm being preferred.

Dispersed on the outside of the barrier layer may be a first layer of another polymer. Such polymer may be comprised the same ternary blend of polymers as is used the inner core. The thickness of this first layer which directly interfaces with the barrier layer may vary. Generally speaking, the thickness of this first layer will range of from about 0.2 mm to about 4.0 mm with a range of from about 0.4 mm to about 0.8 mm being preferred.

Figure 1 and Figure 2 illustrate an embodiment of this invention wherein the first and second reinforcing members 16, 18 of the single reinforcing layer 14 are braided in a pattern such that each first reinforcing member 16 crosses over an oppositely wound second reinforcing member 18, and then passes under an adjacent, oppositely wound reinforcing member 18 in succession. This braid pattern is referred to herein as a 1-over, 1-under braid pattern. The first and second reinforcing members 16, 18 may be wound, for example, using strands having denier values of about 1500, with four ends and 24 carriers of the rotary braiding machine to thereby define a total reinforcement provided by the single reinforcing layer 14 of about 144,000 denier. Other combinations of strand denier value, number of ends and number of carriers are alternatively contemplated to yield a single reinforcing layer 14 providing a total reinforcement not greater than about 144,000. The resulting braid pattern of single reinforcement layer 14 may yield a total coverage of the underlying surface (e.g., the inner core layer 12) in the range of about 75% to about 100%.

The specific arrangement of the strands of the first and second reinforcing members 16, 18 in a 1-over, 1-under braid pattern permits formation of a single reinforcing layer 14 that has a substantially smooth appearance. This smooth appearance, in turn, yields a smooth appearance of the hose 10. Moreover, the specific arrangement prevents or at least minimizes bleed-through of any adjacent layers of the hose 10 through single reinforcing layer 14. For example, the chosen arrangement of single reinforcing layer 14 may prevent or minimize bleed-through of a rubber-based material extruded over single reinforcing layer 14. The chosen arrangement, moreover, determines other properties such as the amount of flexibility of the resulting hose 10.

The hose 10 may further include an outer layer 30 formed over the single reinforcing layer 14, for example, by extruding the outer layer 30 over the single reinforcing layer 14. The outer layer 30 protects the hose 10 and is formed from a material suited for use in an application for which the hose 10 will be used. As a non-limiting example, the outer layer 30 may be formed from any of the various materials described above for the inner core layer 12. The thickness of outer layer 30 is suitably chosen for a specific application. For example, and without limitation, outer layer 30 may have a thickness in the range from about 1.2 mm to about 1.5 mm. The thickness of outer layer 30, along with the dimensions of the inner core layer 12 and those of single reinforcing layer 14, defines an outer diameter of the outer layer 30. For example, and without limitation, outer layer 30 may have an outer diameter in the range from about 11.5 mm to about 12.5 mm.

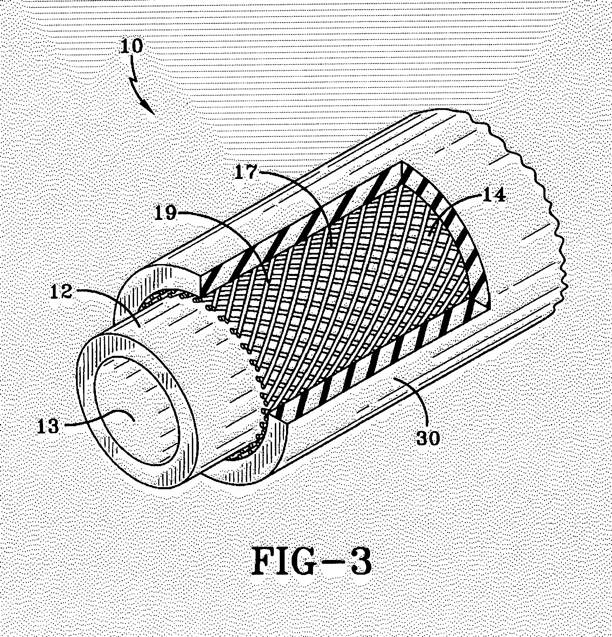

Figure 3 illustrates another embodiment of this invention wherein the friction layer 14 is comprised of a first yarn layer 17 which is spiraled onto the tube from one direction and a second yarn layer 19 being spiraled over the first yarn layer from the other direction. In friction layers of this type the reinforcing members 17 and 19 are simply spirally wound onto the tube 12 of the hose 10 without being braided. For a variety of reasons this type of friction layer 14 is normally preferred in the hoses of this invention.

This invention is illustrated by the following examples that are merely for the purpose of illustration and are not to be regarded as limiting the scope of the invention or the manner in which it can be practiced. Unless specifically indicated otherwise, parts and percentages are given by weight.

### Examples 1-4

In this series of experiments various rubber formulations for the elastomeric tubular inner core layer for the hoses of this invention were formulated cured and tested. These formulations were made by first mixing various ingredients in a non-productive mixing stage. In the procedure used 85 phr of a chlorinated polyethylene elastomer (30 percent chlorine content), 15 phr of ethylvinyl acetate, 95 phr of carbon black, an ester plasticizer in the amount shown in Table 1, 20 phr of magnesium oxide, 3.10 phr of polyethylene wax, 0.30 of trimethyl quinolin antioxidant, 1.00 phr of a hindered phenolic antioxidant, and the amount of chlorinated paraffin indicated in Table 1 were mixed together. As can be seen the total amount of ester plasticizer added was reduced as the amount of chlorinated paraffin was increased to maintain a constant hardness of the vulcanizate. Then, the non-productive mixture was further mixed with 7.90 phr of dicumyl peroxide (60% active) and 2.65 phr of Triallyl Cyanurate (72% active) coagent in a productive mixing stage. The productive compound samples were then cured at a temperature of 160 °C (320°F) for a 40 minute cure time.

The initial tensile strength, elongation, and Shore A hardness of the cured samples was then measured and additional samples were then immersed in Chrysan Type A fluid at 275°F (135°C) and maintained at that temperature for 168 hours. Then, the physical properties of the aged samples were measured and compared with original properties. Tensile strength and elongation were measured according to ASTM D-412 and Shore A hardness was measured according to ASTM-2240. The results of this testing is also reported in Table 1.

**Table 1**

| Example | 1 | 2 | 3 | 4 |
|---|---|---|---|---|
| Level of Chlorinated Paraffin (phr) | None | 10.0 | 20.0 | 30.0 |
| Ester plasticizer (phr) | 45.0 | 35.0 | 25.0 | 15.0 |
| Tensile Strength (MPa) ((psi)) | 8,2 (1186) | 12,3 (1781) | 13,5 (1951) | 15,5 (2248) |
| Elongation | 97% | 164% | 173% | 185% |
| Shore A Hardness | 67 | 60 | 63 | 64 |
| % Change in Tensile Strength | -52% | -23% | -17% | -7% |
| % Change in Elongation | -55% | -27% | -19% | -11% |

As can be seen from Table 1, the incorporation of the chlorinated paraffin into the rubber formulations for the elastomeric tubular inner core layer for the hoses of this invention resulted in much lower changes in tensile strength and elongation after being aged in the fluid at elevated temperature. This is indicative of the hoses of this invention which have a chlorinated paraffin in the tube layer offering better resistance to the fluid and consequently better service life.

### Examples 5-8

In this series of experiments various rubber formulations for the elastomeric tubular inner core layer for the hoses of this invention were formulated, cured and tested. These formulations were made by first mixing various ingredients in a non-productive mixing stage. In the procedure used 75 phr of a chlorosulfonated polyethylene (36 percent chlorine content), 25 phr of a chlorosulfonated polyethylene (30 percent chlorine content), 75 phr of carbon black, 25 phr of Kaolin clay, an ester plasticizer in the amount shown in Table 2, 20 phr of magnesium oxide, 3.0 phr of polyethylene wax, 0.30 of trimethyl dihydroquinoline antioxidant, the level of a hindered phenolic antioxidant shown in Table 2, and the amount of chlorinated paraffin indicated in Table 2 were mixed together. As can be seen the total amount of ester plasticizer added was reduced as the amount of chlorinated paraffin was increased to maintain a constant hardness of the vulcanizate. Then, the non-productive mixture was further mixed with 5.00 phr of dicumyl peroxide (60% active) and 5.60 phr of a Triallyl Cyanurate (72% active) coagent in a productive mixing stage. The productive compound samples were then cured at a temperature of 160 °C (320°F) for a 40 minute cure time.

The initial tensile strength, elongation, and Shore A hardness of the cured samples was then measured and additional samples were then immersed in Chrysan Type A fluid at 275°F (135°C) and maintained at that temperature for 168 hours. Then, the physical properties of the aged samples were measured and compared with original properties. Tensile strength and elongation were measured according to ASTM D-412 and Shore A hardness was measured according to ASTM D-2240. The results of this testing is also reported in Table 1.

**Table 2**

| Example | 5 | 6 | 7 | 8 |
|---|---|---|---|---|
| Level of Chlorinated Paraffin (phr) | None | 15 | 25 | 25 |
| Hindered phenolic antioxidant* (phr) | None | None | None | 1 |
| Ester plasticizer (phr) | 25.0 | 10.0 | 0.0 | 10.0 |
| Tensile Strength (MPa) ((psi)) | 13,4 (1938) | 17,0 (2471) | 188,4 (2661) | 17,8 (2581) |
| Elongation | 80 | 113 | 134 | 130 |
| Shore A Hardness | 76 | 76 | 76 | 76 |
| % Change in Tensile Strength | -26.2% | -10.8% | -5.6% | -2.2% |
| % Change in Elongation | -46.9% | -29.7% | -17.1% | -22.8% |
| Hardness change (pts) | -4 | -4 | -6 | -5 |

| | | | | |
|---|---|---|---|---|
| * Irganox® MD1024 N,N'-bis-β-(3,5-di-tert-butyl-4-hydroxyphenol)-propionyl hydrazide hindered phenolic antioxidant made by Ciba Specialty Chemicals. | | | | |

As can be seen from Table 2, the incorporation of the chlorinated paraffin into the rubber formulations for the elastomeric tubular inner core layer for the hoses of this invention resulted in much lower changes in tensile strength and elongation after being aged in the fluid at elevated temperature. This is indicative of the hoses of this invention which have a chlorinated paraffin in the tube layer offering better resistance to the fluid and consequently better service life.

While certain representative embodiments and details have been shown for the purpose of illustrating the subject invention, it will be apparent to those skilled in this art that various changes and modifications can be made therein without departing from the scope of the subject invention.

## Claims

1. A hose including (1) an elastomeric tubular inner core layer defining a lumen, (2) a friction layer, and (3) an elastomeric cover, **characterized in that** the elastomeric tubular inner core layer is comprised of (i) a chlorinated polyethylene elastomer, (ii) 1 phr to 50 phr of a chlorinated paraffin, and (iii) 30 phr to 120 phr of carbon black.

2. A hose including (1) an elastomeric tubular inner core layer defining a lumen, (2) a friction layer, and (3) an elastomeric cover, **characterized in that** the elastomeric tubular inner core layer is comprised of (i) a chlorosulfonated polyethylene elastomer, (ii) 1 phr to 50 phr of a chlorinated paraffin, and (iii) 30 phr to 120 phr of carbon black.

3. The hose as specified in any of the preceding claims **characterized in that** the chlorinated paraffin has a chlorine content of 40 weight percent to 70 weight percent.

4. The hose as specified in any of the preceding claims **characterized in that** the chlorinated paraffin is present in the elastomeric tubular inner core layer at a level which is within the range of 5 phr to 48 phr.

5. The hose as specified in any of the preceding claims **characterized in that** the carbon black is present at a level which is within the range of 60 phr to 115 phr.

6. The hose as specified in any of the preceding claims **characterized in that** the friction layer is comprised of 2 layers of yarn which are spirally wound.

7. The hose as specified in claim 1 or 2 **characterized in that** the chlorinated paraffin has a chlorine content of 50 weight percent to 70 weight percent, wherein the chlorinated paraffin is present in the elastomeric tubular inner core layer at a level which is within the range of 10 phr to 45 phr, and wherein the carbon black is present at a level which is within the range of 70 phr to 110 phr.

8. The hose as specified in any of the preceding claims **characterized in that** the chlorinated paraffin has a chlorine content of 50 weight percent to 55 weight percent.

9. The hose as specified in any of the preceding claims **characterized in that** the chlorinated paraffin is present in the elastomeric tubular inner core layer at a level which is within the range of 15 phr to 42 phr.

10. The hose as specified in any of the preceding claims **characterized in that** the carbon black is present at a level which is within the range of 90 phr to 100 phr.

11. The hose as specified in any of the preceding claims **characterized in that** the elastomeric tubular inner core layer is cured with a peroxide curing agent.

12. The hose as specified in any of claims 1-10 **characterized in that** the elastomeric tubular inner core layer is cured with a thiodiazole cure system.

13. The hose as specified in any of the preceding claims **characterized in that** the elastomeric tubular inner core layer is void of zinc compounds.

14. The hose as specified in any of te preceding claims **characterized in that** the friction layer is comprised of braided yarns.

## Patentansprüche

1. Schlauch, der enthält: (1) eine elastomere röhrenförmige innere Kernschicht, die eine Öffnung definiert, (2) eine Reibungsschicht und (3) eine elastomere Abdeckung, **dadurch gekennzeichnet, dass** die elastomere röhrenförmige innere Kernschicht aus (i) einem chlorierten Polyethylenelastomer, (ii) 1 phr bis 50 phr eines chlorierten Paraffins und (iii) 30 phr bis 120 phr Kohlenschwarz besteht.

2. Schlauch, der enthält: (1) eine elastomere röhrenförmige innere Kernschicht, die eine Öffnung definiert, (2) eine Reibungsschicht und (3) eine elastomere Abdeckung, **dadurch gekennzeichnet, dass** die elastomere röhrenförmige innere Kernschicht aus (i) einem chlorsulfonierten Polyethylenelastomer, (ii) 1 phr bis 50 phr eines chlorierten Paraffins und (iii) 30 phr bis 20 phr Kohlenschwarz besteht.

3. Schlauch nach einem der vorhergehenden Ansprüche, **dadurch gekennzeichnet, dass** das chlorierte Paraffin einen Chlorgehalt von 40 Gew.-% bis 70 Gew.-% besitzt.

4. Schlauch nach einem der vorhergehenden Ansprüche, **dadurch gekennzeichnet, dass** das chlorierte Paraffin in der elastomeren röhrenförmigen inneren Kernschicht in einem Gehalt vorhanden ist, der innerhalb des Bereichs von 5 phr bis 48 phr liegt.

5. Schlauch nach einem der vorhergehenden Ansprüche, **dadurch gekennzeichnet, dass** das Kohlenschwarz in einem Gehalt vorhanden ist, der innerhalb des Bereichs von 60 phr bis 115 phr liegt.

6. Schlauch nach einem der vorhergehenden Ansprüche, **dadurch gekennzeichnet, dass** die Reibungsschicht aus 3 Schichten Garn besteht, die spiralförmig gewickelt sind.

7. Schlauch nach Anspruch 1 oder 2, **dadurch gekennzeichnet, dass** das chlorierte Paraffin einen Chlorgehalt von 50 Gew.-% bis 70 Gew.-% besitzt, wobei das chlorierte Paraffin in der elastomeren röhrenförmigen inneren Kernschicht in einem Gehalt vorhanden ist, der innerhalb des Bereichs von 10 phr bis 45 phr liegt, und wobei das Kohlenschwarz in einem Gehalt vorhanden ist, der innerhalb des Bereichs von 70 phr bis 45 phr liegt.

8. Schlauch nach einem der vorhergehenden Ansprüche, **dadurch gekennzeichnet, dass** das chlorierte Paraffin einen Chlorgehalt von 50 Gew.-% bis zu 55 Gew.-% aufweist.

9. Schlauch nach einem der vorhergehenden Ansprüche, **dadurch gekennzeichnet, dass** das chlorierte Paraffin in der elastomeren röhrenförmigen inneren Kernschicht in einem Gehalt vorhanden ist, der innerhalb des Bereichs von 15 phr bis 42 phr liegt.

10. Schlauch nach einem der vorhergehenden Ansprüche, **dadurch gekennzeichnet, dass** das Kohlenschwarz in einem Gehalt vorhanden ist, der innerhalb des Bereichs von 90 phr bis 100 phr liegt.

11. Schlauch nach einem der vorhergehenden Ansprüche, **dadurch gekennzeichnet, dass** die elastomere röhrenförmige innere Kernschicht mit einem Peroxidaushärtemittel ausgehärtet wird.

12. Schlauch nach einem der Ansprüche 1-10, **dadurch gekennzeichnet, dass** die elastomere röhrenförmige innere Kernschicht mit einem Thiodiazolaushärtemittel ausgehärtet wird.

13. Schlauch nach einem der vorhergehenden Ansprüche, **dadurch gekennzeichnet, dass** die elastomere röhrenförmige innere Kernschicht frei von Zinkverbindungen ist.

14. Schlauch nach einem der vorhergehenden Ansprüche, **dadurch gekennzeichnet, dass** die Reibungsschicht aus geflochtenem Garn besteht.

## Revendications

1. Tuyau incluant (1) une couche de coeur intérieure tubulaire élastomère définissant un lumen, (2) une couche de friction, et (3) une couverture élastomère, **caractérisé en ce que** la couche de coeur intérieure tubulaire élastomère est constituée de (i) un élastomère polyéthylène chloré, (ii) 1 phr à 50 phr de paraffine chlorée, et (iii) 30 phr à 120 phr de noir de carbone.

2. Tuyau incluant (1) une couche de coeur intérieure tubulaire élastomère définissant un lumen, (2) une couche de friction, et (3) une couverture élastomère, **caractérisé en ce que** la couche de coeur intérieure tubulaire élastomère est constituée de (i) un élastomère polyéthylène chlorosulphoné, (ii) 1 phr à 50 phr de paraffine chlorée, et (iii) 30 phr à 120 phr de noir de carbone.

3. Tuyau selon l'une quelconque des revendications précédentes, **caractérisé en ce que** la paraffine chlorée a une teneur en chlore de 40 % en poids à 70 % en poids.

4. Tuyau selon l'une quelconque des revendications précédentes, **caractérisé en ce que** la paraffine chlorée est présente dans la couche de coeur intérieure tubulaire élastomère à un niveau dans la plage de 5 phr à 48 phr.

5. Tuyau selon l'une quelconque des revendications précédentes, **caractérisé en ce que** le noir de carbone est présent à un niveau dans la plage de 60 phr à 115 phr.

6. Tuyau selon l'une quelconque des revendications précédentes, **caractérisé en ce que** la couche de friction est constituée de deux couches de fils qui sont enroulés en spirale.

7. Tuyau selon la revendication 1 ou 2, **caractérisé en ce que** la paraffine chlorée a une teneur en chlore de 50 % en poids à 70 % en poids, dans lequel la paraffine chlorée est présente dans la couche de coeur intérieure tubulaire élastomère à un niveau qui est dans la plage de 10 phr à 45 phr, et dans lequel le noir de carbone est présent à un niveau qui est dans la plage de 70 phr à 110 phr.

8. Tuyau selon l'une quelconque des revendications précédentes, **caractérisé en ce que** la paraffine chlorée a une teneur en chlore de 50 % en poids à 55 % en poids.

9. Tuyau selon l'une quelconque des revendications précédentes, **caractérisé en ce que** la paraffine chlorée est présente dans la couche de coeur intérieure tubulaire élastomère à un niveau qui est dans la plage de 15 phr à 42 phr.

10. Tuyau selon l'une quelconque des revendications précédentes, **caractérisé en ce que** le noir de carbone est présent à un niveau qui est dans la plage de 90 phr à 100 phr.

11. Tuyau selon l'une quelconque des revendications précédentes, **caractérisé en ce que** la couche de coeur intérieure tubulaire élastomère est amenée à durcir avec un agent de durcissement au peroxyde.

12. Tuyau selon l'une quelconque des revendications 1 à 10, **caractérisé en ce que** la couche de coeur intérieure tubulaire élastomère est amenée à durcir avec un système de durcissement au thiodiazole.

13. Tuyau selon l'une quelconque des revendications précédentes, **caractérisé en ce que** la couche de coeur intérieure tubulaire élastomère est dépourvue de composés au zinc.

14. Tuyau selon l'une quelconque des revendications précédentes, **caractérisé en ce que** la couche de friction est constituée de fils tressés.
